# EUROPEAN PATENT APPLICATION

(11) **EP 4 478 387 A2**
(43) Date of publication of application: **18.12.2024**
(21) Application number: 24180186.9
(22) Date of filing: 05.06.2024
(51) Int. Cl.: H01G 11/50, H01G 11/06, H01G 11/38, H01G 11/60, H01G 11/62, H01G 11/64, H01M 12/00

(54) **ELECTROLYTE COMPOSITIONS FOR ENERGY STORAGE CELLS WITH FAST CHARGE AND DIS-CHARGE CAPABILITES**

(30) Priority: 13.06.2023 DE 102023115376
(71) Applicant: Skeleton Technologies GmbH, 01900 Grossröhrsdorf (DE)
(72) Inventor: Pattarachai, Srimuk, 01900 Großröhrsdorf (DE); Väli, Ronald, 01900 Großröhrsdorf (DE)
(74) Representative: KASTEL Patentanwälte PartG mbB

(57) **Abstract**

An organic electrolyte (4) composition for an energy storage cell (1) consists of 50 vol% to 95 vol% acetonitrile; 5 vol% to 50 vol% ethylenecarbonate; and added to that a lithium conductive salt, preferably LiPF₆ or LiBF₄.

## Description

The invention relates to energy storage cells, e.g. hybrid supercapacitors, with fast charge and discharge capabilities as well as their components, such as electrodes and electrolytes.

The terms used herein for macropores, mesopores and micropores are based on the classification adopted by IUPAC, according to which macropores have a pore diameter greater than 50 nm, mesopores have a pore diameter between 2 nm and 50 nm, and micropores have a pore diameter of less than 2 nm. Furthermore, as used herein, the terms microporous, mesoporous or macroporous indicated that the corresponding type of pores is present. It does not exclude the presence of other types of pores, e.g. a microporous material is not limited to having only micropores, but may also include meso- and/or macropores.

The particle sizes as used herein are measured by laser diffraction in a liquid medium. Auxiliary materials such as surfactants can be used. The evaluation of the measurement is carried out according to Mie and/or Fraunhofer. In a typical manner, the fraction X of particles with a size smaller than S is referred to as DX with size S, e.g. D90 30 µm means that 90 % of particles have a size smaller than 30 µm. This terminology is not limited to particle sizes and can be used for other size distributions.

Gravimetric surface area, i.e. surface area per unit weight, refers to values obtained by nitrogen physisorption in conjunction with the Brunauer-Emmet-Teller (BET) and Rouquerol evaluation methods, as described in the IUPAC Technical Report: "Physisorption of gases, with special reference to the evaluation of surface area and pore size distribution (IUPAC Technical Report)" by Thommes et al., Pure Appl. Chem. 2015; 87(9-10): 1051-1069. This disclosure is incorporated herein by reference. For the sake of brevity the gravimetric surface area so determined is also referred to as BET nitrogen surface area.

In recent years the demand for energy storage cells has substantially increased, be it in the field of automobiles, industrial applications, mass transportation, or grid regulation. The cells may serve as traction battery, intermediate energy storage for kinetic energy recovery systems, or energy storage for mechanical assistance systems, such as anti-skid systems or active shock absorbers. In grid regulation the cells store excess produced energy, in particular excess wind or solar energy, and help closing the energy gap in situations of high demand. For all these applications it is useful to have a type of energy storage cell that allows for fast charging or discharging, or in other words a high peak power.

Energy storage cells may generally be divided into batteries and capacitors. While batteries store electric energy in chemical form, capacitors usually store electric energy in the electric field. Batteries are usually not capable of achieving the peak powers that are required for the abovementioned applications.

Ultracapacitors, also known as supercapacitors, are a kind of capacitor and can be separated into double-layer capacitors and pseudocapacitors. The former store electrical energy in an electrostatic double-layer, whereas the latter store the electrical energy electrochemically, but in a different manner than batteries. Recently, hybrid (super)capacitors have been developed that combine the features of double-layer capacitors and pseudocapacitors.

These capacitors usually exhibit a large voltage variation during charging and discharging, whereas batteries do not. The main advantage for capacitors is that they are highly suitable for applications that require large peak powers or - in other words - a large energy transfer within very short time.

This capability, in particular for supercapacitors, is not without limits, since in general the actually usable capacity depends on the discharge current: the larger the current, the smaller the usable capacity.

US 5 258 245 A discloses a lithium battery comprising a positive electrode mainly of vanadium pentoxide, a negative electrode mainly of lithium doped niobium pentoxide, and an electrolyte mainly of an anhydrous solvent with dissolved lithium salt.

US 2021 /0 110 980 A1, US 2021 / 0 110 979 A1, and US 2021 / 0 218 048 A1 disclose cell concepts that employ three or four electrodes.

DE 10 2018 202 929 A1 discloses a hybrid supercapacitor.

It is the object of the invention to improve ultracapacitors with respect to their electrical properties, preferably the actually usable capacity or charge/discharge speed.

The invention provides a negative active material composition for a negative electrode of an energy storage cell, the composition consisting of:
- 70 wt% to 99 wt% of negative active material;
- 1 wt% to 10 wt% of at least one binder;
- optionally up to 10 wt% in total of at least one conductive additive; and
- optionally less than 10 wt% in total of other components or impurities,
wherein the negative active material consists of Nb₂O₅ particles and microporous carbon (MC) particles.

The invention provides a method for manufacturing a negative electrode for an energy storage cell, the method comprising:
a) provide 1 wt% to 20 wt% binder in a mixing vessel;
b) mixing in the vessel, so as to obtain a slurry:
   - 60 wt% to 99 wt% of negative active material that includes 1 wt% to 99 wt% of Nb₂O₅ particles and the remainder up to 100 wt% of microporous carbon (MC) particles;
   - optionally up to 10 wt% in total of at least one conductive additive; and
   - optionally less than 10 wt% in total of other components;
c) coating a conductive electrode substrate with the slurry and heating the coated electrode substrate, thereby generating the negative electrode.

In an embodiment all binders have a total proportion of 2 wt% to 4 wt% and the proportion of the negative active material is 76 wt% to 98 wt%. In an embodiment each binder has a proportion of no more than 2 wt%.

In an embodiment, the amount of Nb₂O₅ particles is 30 wt%, 40 wt%, 50 wt%, 60 wt%, or 70 wt%. In an embodiment, the amount of MC particles is 30 wt%, 40 wt%, 50 wt%, 60 wt%, or 70 wt%.

In an embodiment the negative active material consists of Nb₂O₅ particles and MC particles. In an embodiment the Nb₂O₅ particles mostly consist of orthorhombic Nb₂O₅. In an embodiment the Nb₂O₅ particles consists of more than 90 wt% of orthorhombic Nb₂O₅. It is also possible to use monoclinic Nb₂O₅ or mixtures thereof with orthorhombic Nb₂O₅.

In an embodiment the Nb₂O₅ particles have a particle size of D90 1 µm to 100 µm, preferably of 2 µm to 60 µm, more preferably of 10 µm to 30 µm. In an embodiment the Nb₂O₅ particles have a particle size of D10 0.05 µm to 10 µm, preferably 0.3 µm to 5 µm, more preferably of 0.3 µm to 3 µm.

In an embodiment the MC particles have a BET nitrogen surface area of at least 60 m²/g, preferably of at least 1000 m²/g.

In an embodiment the MC particles have a particle size D90 of 5 µm to 30 µm, preferably of 5 µm to 20 µm. In an embodiment the MC particles have a particle size of D10 1 µm to 2 µm. In an embodiment the MC particles comprise carbide derived carbon (CDC) particles.

In an embodiment each conductive additive is selected from a group consisting of carbon black, carbon nanotubes (CNTs), graphene, and mixtures thereof. Preferably, the CNTs are multi-walled CNTs (MWCNTs). It is also possible to use single-walled carbon nanotubes (SWCNTs) or mixtures of MWCNTs and SWCNTs.

In an embodiment the composition includes 1 wt% to 10 wt% carbon black. In an embodiment the composition includes 1 wt% to 8 wt% carbon black. In an embodiment the composition includes 1 wt% to 3 wt% carbon black. In an embodiment the composition includes 2 wt% to 6 wt% carbon black. In an embodiment the composition includes 3 wt% to 7 wt% carbon black.

In an embodiment the composition includes 0.3 wt% to 2 wt% CNTs. In an embodiment the composition includes 0.3 wt% to 1.0 wt% CNTs.

The invention provides a positive active material composition for a positive electrode of an energy storage cell, the composition consisting of:
- 0.5 wt% to 10 wt% carbon black (CB);
- 1 wt% to 20 wt% of at least one binder;
- 56 wt% to 98.5 wt% of positive active material that for the most part includes or for the most part consists of LiMn₂O₄ (LMO) particles;
- optionally 0.1 wt% to 2 wt% carbon nanotubes (CNTs);
- optionally 0.1 wt% to 2 wt% graphene; and
- optionally less than 10 wt% of other components or impurities.

The invention provides a method for manufacturing a positive electrode for an energy storage cell, the method comprising:
a) provide 1 wt% to 20 wt% binder in a mixing vessel;
b) mixing in the vessel, so as to obtain a slurry:
   - 0.5 wt% to 10 wt% carbon black (CB);
   - 56 wt% to 98.5 wt% of positive active material that consists of LiMn₂O₄ (LMO) particles;
   - optionally 0.1 wt% to 2 wt% carbon nanotubes (CNTs); and
   - optionally 0.1 wt% to 2 wt% graphene;
c) coating a conductive electrode substrate with the slurry and heating the coated electrode substrate, thereby generating the positive electrode.

In an embodiment the LMO particles are substituted with niobium-comprising Nb-LiMn₂O₄ (Nb-LMO), wherein optionally the amount of niobium in the positive active material Nb-LiMn₂O₄ (Nb-LMO) ranges between 0.001 % to 5.0% based on the mass lithium manganese oxide.

In an embodiment the LMO or Nb-LMO particles have a particle size of D90 of 30 µm to 40 µm. Preferably, the LMO or Nb-LMO particles have a particle size of D50 of 10 µm to 20 µm. Preferably, the LMO or Nb-LMO particles have a particle size of D10 of 3 µm to 9 µm.

In an embodiment the proportion of CNTs deviates from the proportion of graphene or vice versa by less than 10%. In an embodiment the proportions of CNTs and graphene are identical.

The invention provides an energy storage cell for storing electrical energy, the cell comprising a plurality of electrodes that are immersed in an organic electrolyte, wherein at least one electrode is configured as a negative electrode and at least one electrode is configured as a positive electrode, wherein the negative electrode includes a negative electrode material composition as previously described or obtainable by a previously described method. Alternatively or additionally positive electrode includes a positive electrode material composition as previously described or obtainable by a previously described method.

In an embodiment the electrolyte consists of 80 vol% to 95 vol% acetonitrile, 5 vol% to 20 vol% ethylenecarbonate, and a lithium conductive salt.

The invention provides an organic electrolyte composition for an energy storage cell, the composition consisting of
- 80 vol% to 95 vol% acetonitrile;
- 5 vol% to 20 vol% ethylenecarbonate; and added to that
- 2.5 to 15 mM Lithiumbis(oxalato)borate (LiBOB) (CAS-Nr. 244761-29-3), and
- optionally a lithium conductive salt.

In an embodiment the proportion of acetonitrile is 85 vol% to 93 vol% and the proportion of ethylenecarbonate is 7 vol% to 15 vol%. In an embodiment the proportion of acetonitrile is 88 vol% to 93 vol% and the proportion of ethylenecarbonate is 7 vol% to 12 vol%. In an embodiment the proportion of acetonitrile is 89 vol% to 91 vol% and the proportion of ethylenecarbonate is 9 vol% to 11 vol%.

Preferably, the proportion of acetonitrile is 90 vol% and the proportion of ethylenecarbonate is 10 vol%.

Preferably, the proportion of acetonitrile is 65 vol% to 75 vol% and the proportion of ethylenecarbonate is 25 vol% and 35 vol%. Preferably, the proportion of acetonitrile is 68 vol% to 73 vol% and the proportion of ethylenecarbonate is 27 vol% and 32 vol%. Preferably, the proportion of acetonitrile is 69 vol% to 71 vol% and the proportion of ethylenecarbonate is 29 vol% and 31 vol%. Preferably, the proportion of acetonitrile is 70 vol% and the proportion of ethylenecarbonate is 30 vol%.

Preferably, the proportion of acetonitrile is 50 vol% and the proportion of ethylenecarbonate is 50 vol%.

In an embodiment the conductive lithium salt has a concentration of 0.1 mol/l to 3 mol/l.

In an embodiment the lithium conductive salt is selected from a group consisting of lithium perchlorate (LiClO₄), lithium tetrafluoroborate (LiBF₄), lithium hexafluorophosphate (LiPF₆), lithium hexafluoroarsenate (LiAsF₆), lithium trifluoromethanesulfonate (LiSOsCFs), lithium bis(trifluoromethylsulfonyl)imide (LiN(SO₂CF₃)₂), lithium bis(pentafluoroethanesulfonyl)imide (LiN(SO₂C₂F₅)₂), and mixtures thereof. In an embodiment the lithium conductive salt is LiPF₆.

Preferably the portion of Lithiumbis(oxalato)borate (LiBOB) is 10 mM. In an embodiment the portion of of Lithiumbis(oxalato)borate (LiBOB) is 5 mM.

Applicant found that electrolyte compositions comprising LiBOB generally outperform comparable compositions without LiBOB with respect to capacity, cell energy and cell power based on mass.

The invention provides an energy storage cell for storing electrical energy, the cell comprising a plurality of electrodes that are immersed in an organic electrolyte according to any of the preceding claims, wherein at least one electrode is configured as a negative electrode and at least one electrode is configured as a positive electrode. Preferably, the negative electrode includes a previously described negative electrode material composition is obtainable by a previously described method. Preferably, the positive electrode includes a previously described positive electrode material composition or is obtainable by a previously described method.

The invention provides a use of a previously described electrolyte in an energy storage cell, e.g. an ultracapacitor, that comprises a plurality of electrodes to be immersed in the electrolyte, wherein at least one electrode is configured as a negative electrode and at least one electrode is configured as a positive electrode, wherein the negative electrode includes a negative active material that comprises or consists of Nb₂O₅ particles, microporous carbon (MC) particles and unavoidable impurities, and/or wherein the positive electrode includes positive active material that for the most part includes or for the most part consists of LiMn₂O₄ (LMO) or Nb-LiMn₂O₄ (Nb-LMO) particles and unavoidable impurities.

The invention provides an energy storage cell for storing electrical energy, the cell comprising a positive electrode and a negative electrode immersed in an organic electrolyte,
wherein the negative electrode includes a negative active material composition that has Nb₂O₅ particles and microporous carbon (MC) particles;
wherein the positive electrode includes a positive active material composition that for the most part has LiMn₂O₄ (LMO) or Nb-LiMn₂O₄ (Nb-LMO) particles.

In an embodiment the negative active material composition includes a negative active material that consists of Nb₂O₅ particles and MC particles.

In an embodiment the amount of Nb₂O₅ particles and the amound of MC particles is selected from a group consisting of 30 wt%, 40 wt%, 50 wt%, 60 wt%, and 70 wt%, such that the total amount is 100 wt%.

In an embodiment the negative electrode composition and/or the positive electrode composition include at least one conductive additive.

In an embodiment the at least one conductive additive is selected from a group consisting of carbon black (CB), carbon nanotubes (CNTs), graphene, and mixtures thereof.

In an embodiment the negative active material composition consists of more than 50 wt%, preferably of more than 60 wt%, negative active material. In an embodiment the positive active material composition consists of more than 50 wt%, preferably of more than 90 wt%, preferably of more than 95 wt%, preferably of 97 wt% or more, positive active material.

In an embodiment the Nb₂O₅ particles have a particle size of D90 1 µm to 100 µm, preferably 2 µm to 60 µm, more preferably 10 µm to 30 µm. In an embodiment the Nb₂O₅ particles have a particle size of D10 0.05 µm to 10 µm, preferably 0.3 µm to 5 µm, more preferably 0.3 µm to 3 µm
In an embodiment the MC particles have a BET nitrogen surface area of at least 60 m²/g, preferably of at least 1000 m²/g.

In an embodiment the MC particles have a particle size D90 of 5 µm to 30 µm, preferably 5 µm to 20 µm. In an embodiment the MC particles have a particle size of D10 1 µm to 2 µm.

In an embodiment the MC particles comprise carbide derived carbon particles.

In an embodiment CNTs are multi-walled CNTs (MWCNTs).

In an embodiment the negative electrode composition includes 1 wt% to 10 wt% carbon black. In an embodiment the negative electrode composition includes 1 wt% to 8 wt% carbon black. In an embodiment the negative electrode composition includes 1 wt% to 3 wt% carbon black. In an embodiment the negative electrode composition includes 2 wt% to 6 wt% carbon black. In an embodiment the negative electrode composition includes 3 wt% to 7 wt% carbon black.

In an embodiment the positive electrode composition includes 1 wt% to 10 wt% carbon black. In an embodiment the positive electrode composition includes 1 wt% to 8 wt% carbon black. In an embodiment the positive electrode composition includes 1 wt% to 3 wt% carbon black. In an embodiment the positive electrode composition includes 2 wt% to 6 wt% carbon black. In an embodiment the positive electrode composition includes 3 wt% to 7 wt% carbon black.

In an embodiment the negative electrode composition includes 0.3 wt% to 2 wt%, preferably 0.3 wt% to 1.0 wt% CNTs. In an embodiment the positive electrode composition includes 0.3 wt% to 2 wt%, preferably 0.3 wt% to 1.0 wt% CNTs.

In an embodiment the negative electrode composition includes 0.3 wt% to 2 wt%, preferably 0.3 wt % to 1.0 wt%, graphene. In an embodiment the positive electrode composition includes 0.3 wt% to 2 wt%, preferably 0.3 wt % to 1.0 wt%, graphene.

In an embodiment the proportion of CNTs deviates from the proportion of graphene or vice versa by less than 10%. In an embodiment the proportions of CNTs and graphene are identical.

In an embodiment the electrolyte includes a lithium conductive salt, 80 vol% to 95 vol% acetonitrile, and 5 vol% to 20 vol% ethylenecarbonate.

In an embodiment the lithium conductive salt is selected from a group consisting of lithium perchlorate (LiClO₄), lithium tetrafluoroborate (LiBF₄), lithium hexafluorophosphate (LiPF₆), lithium hexafluoroarsenate (LiAsF₆), lithium trifluoromethanesulfonate (LiSOsCFs), lithium bis(trifluoromethylsulfonyl)imide (LiN(SO₂CF₃)₂), lithium bis(pentafluoroethanesulfonyl)imide (LiN(SO₂C₂F₅)₂), and mixtures thereof. In an embodiment the lithium conductive salt is LiPF₆. Preferably the portion of Lithiumbis(oxalato)borate (LiBOB) is 10 mM. In an embodiment the portion of of Lithiumbis(oxalato)borate (LiBOB) is 5 mM.The Nb₂O₅ particles allow redox reactions and insertion of lithium ions into their crystal structure. The microporous carbon particles include micropores that allow for the formation of an electrochemical double-layer in the micropores. As a result, the equivalent series resistance (ESR) at room temperature can be reduced to below 4 mΩ for 1 s (discharging time. For shorter (dis-)charging times of 10 ms the ESR can be reduced further to below 1 mΩ. For temperatures down to -20 °C, the 1 s ESR is still below 15 mΩ and the 10 ms ESR is below 2 mΩ. At -35°C the 1 s ESR increases to 85 mΩ and the 10 ms ESR to about 30 mΩ.

Experiments of the Applicant found that particular compositions of the conductive addtives allow improvement of the available gravimetric capacity depending on the gravimetric current. The gravimetric capacity is the amount of milliamperehours per gram of active material, whereas the gravimetric current is the amount of milliamperes per gram of active material.

The addition of either graphene or CNTs improves the available gravimetric capacity for gravimetric currents below 400 mA/g. Surprisingly, the addition of CNTs and graphene with an equal amount works best, in particular for the positive electrode. Here, a gravimetric capacity between 80 mAh/g and 120 mAh/g can be achieved for gravimetric currents of up to 1000 mA/g. The largest gain is obtained for gravimetric currents of more than 200 mA/g, where the available gravimetric capacity is about 2-fold to 5-fold compared to an electrode with only one conductive additive.

An increase by a factor of two of the available gravimetric capacity for the negative electrode can be achieved with the addition of CNTs to carbon black alone. Using CNTs allows the available gravimetric capacity to be above 80 mAh/g for gravimetric currents up to 1000 mA/g.

Another improvement is the available cell voltage. Lithium-ion batteries (LIB) may have a cell voltage of about 4.2 V taking into account sacrificial additives in the electrolyte that passivate the negative electrode. This is undesirable here, since the passivation, particularly on the carbon component on the anode side, reduces the available peak power capacity. Due to the use of lithium manganese oxide (LiMn₂O₄) or Nb-LiMn₂O₄ (Nb-LMO) a cell voltage of up to 3.0 V is possible.

The active materials of the electrodes allow a higher electrode density, which at least for ultracapacitors translates to a higher energy density.

Overall, Applicant found that the both cell energy and Cell Power, i.e. wat-thours per kilogram of mass of cell and watts per kilogram of mass of cell, in particular when LiBOB is added to the electrolyte, can be notably increased in comparison to those electrolytes where LiBOB is not present. Thus, an overall improvement of the electrical properties can be achieved for a wide range of applications.

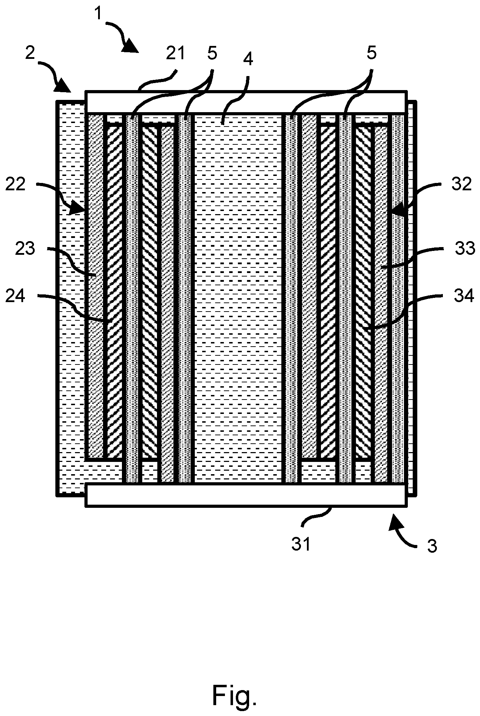

Embodiments of the invention are described in more detail with reference to the accompanying schematic drawings. Therein the only Fig. schematically depicts a cross-section through an energy storage cell according to the invention.

### Energy storage cell

As depicted in the Fig., an energy storage cell 1 may be configured as a hybrid ultracapacitor. The energy storage cell 1 is preferably formed as a cylinder. The energy storage cell 1 comprises a first electrode arrangement 2 and a second electrode arrangement 3. Both electrode arrangements are immersed in an organic electrolyte 4. Furthermore, the energy storage cell 1 comprises a separator 5 that is interposed between the first and second electrode arrangements 2, 3.

It should be noted that the energy storage cell 1 usually contains a plurality of windings of the first and second electrode arrangements 2, 3 about the cylinder axis, however for the sake of clarity only portions are shown here.

The first electrode arrangement 2 comprises an anode terminal 21. The anode terminal 21 is arranged so that an external electric contact can be formed. The first electrode arrangement 2 comprises a negative electrode 22. The negative electrode 22 is electrically coupled to the anode terminal 21. The negative electrode 22 includes a current collector 23 that is made of metal, preferably aluminium. The current collector 23 contacts the anode terminal 21. The negative electrode 22 includes a negative electrode material 24.

The second electrode arrangement 3 comprises a cathode terminal 31. The cathode terminal 31 is arranged so that an external electric contact can be formed. The second electrode arrangement 3 comprises a positive electrode 32. The positive electrode 32 is electrically coupled to the anode terminal 31. The positive electrode 32 includes a current collector 33 that is made of metal, preferably aluminium. The current collector 33 contacts the cathode terminal 31. The positive electrode 32 includes a positive electrode material 34.

### Manufacturing the negative electrode - Example 1

Carboxymethyl cellulose (CMC) binder is provided and optionally mixed with water. The proportion of the CMC binder is 2 wt%.

Carbon black (CB) is added as a first conductive additive with a proportion of 5 wt%.

Microporous carbon (MC) particles and Nb₂O₅ particles are added as a negative active material. The Nb₂O₅ particles are made of orthorombic Nb₂O₅. The negative active material makes up the remainder to 100 wt%, apart from unavoidable impurities. The negative active material consists of 60 wt% Nb₂O₅ particles and 40 wt% MC particles.

The MC particles have a particle size of D90 of 10 µm to 15 µm and the Nb₂O₅ particles have a particle size of D90 of 0.5 µm to 60 µm. The MC particles can be carbide derived carbon such as from SiC or TiC and have a BET nitrogen surface are of more than 1000 m²/g.

Styrene butadiene rubber (SBR) is added as a second binder with a proportion of 2 wt%.

After mixing a slurry is obtained that can be distributed onto a conductive electrode substrate, such as the current collector 23.

The coated substrate is then heated, in order to remove possible solvents and to allow the binder to fully attach to the electrode components, thereby forming the negative electrode 22.

### Example 2

The method of Example 1 is repeated, apart from the proportions of some components of the composition. The binders remain unchanged. CB is added with a proportion of 4 wt%. Carbon nanotubes (CNTs) are added as a second conductive additive with a proportion of 0.5 wt% together with the CB. The proportion of the negative active material is adapted accordingly.

### Example 3

The method of Example 2 is repeated, apart from the proportions of some components of the composition. The binders remain unchanged. Carbon black (CB) is added with a proportion of 2 wt%. CNTs are added with a proportion of 0.5 wt%. The proportion of the negative active material is adapted accordingly.

Subsequent Table 1 compiles the available gravimetric capacity for negative electrodes according to Examples 1 to 3.

**Table 1**

| | gravimetric capacity (mAh/g) | | |
|---|---|---|---|
| gravimetric current (mA/g) | Example 1 | Example 2 | Example 3 |
| 50 | 76 | 143 | 74 |
| 100 | 69 | 127 | 57 |
| 200 | 64 | 115 | 50 |
| 500 | 53 | 97 | 33 |
| 1000 | 42 | 82 | 23 |

### Example 4

The methods of Example 1 to Example 3 are repeated, wherein the amount of Nb₂O₅ particles is changed to 30 wt%, 40 wt%, 50 wt%, and 70 wt%. The amount of MC particles is adapted accordingly to 70 wt%, 60 wt%, 50 wt%, and 30 wt%.

### Example 5

The methods of Example 1 to Example 3 are repeated, wherein the particle size of the MC particles is changed to D90 of 20 µm to 50 µm.

### Manufacturing the positive electrode - Example 1

Carboxymethyl cellulose (CMC) binder is provided and optionally mixed with water. The proportion of the CMC binder is 4 wt%.

Carbon black (CB) is added with a proportion of 2 wt%. Carbon nanotubes (CNTs) are added with a proportion of 1 wt%.

LiMn₂O₄ (LMO) or Nb-LiMn₂O₄ (Nb-LMO) particles are added as a positive active material and make up the bulk of the positive electrode material.

Acrylic binder is added as a second binder with a proportion of 2 wt%.

After mixing a slurry is obtained that can be distributed onto a conductive electrode substrate, such as the current collector 33.

The coated substrate is then heated, so as to remove possible solvents and cure the binder, thereby forming the positive electrode 32.

### Example 2

The method of Example 1 is repeated, apart from the proportions of some components of the composition. The binders, CB, and positive active material remain unchanged. Now, instead of CNTs, 1 wt% of graphene is added.

### Example 3

The method of Example 1 is repeated, apart from the proportions of some components of the composition. The binders, CB, and positive active material remain unchanged. The proportion of CNTs is reduced to 0.5 wt% and in addition 0.5 wt% of graphene are added.

Subsequent Table 2 compiles the available gravimetric capacity for positive electrodes according to Examples 1 to 3.

**Table 2**

| | gravimetric capacity (mAh/g) | | |
|---|---|---|---|
| gravimetric current (mA/g) | Example 1 | Example 2 | Example 3 |
| 50 | 96 | 105 | 114 |
| 100 | 91 | 101 | 112 |
| 200 | 66 | 87 | 108 |
| 500 | 28 | 36 | 98 |
| 1000 | 19 | 22 | 80 |

### Composition of electrolyte - Example 1

The organic electrolyte 4 is obtained by mixing 90 vol % of acetonitrile (ACE) with 10 vol % of ethylenecarbonate (EC) and adding an amount of LiPF₆ so that its concentration in the liquid components is 1 mol/l.

### Example 2

The organic electrolyte 4 is obtained by changing the amount of ACE to 85 vol%, 88 vol%, 89 vol%, 91 vol %, 93 vol%, and 95 vol% and adapting the amount of EC accordingly. The concentration of LiPF₆ remains unchanged.

### Example 3

The organic electrolyte 4 is obtained by changing the amount of ACE to 65 vol%, 68 vol%, 69 vol%, 70 vol%, 71 vol%, 73 vol% and 75 vol%, and adapting the amount of EC accordingly. The concentration of LiPF₆ remains unchanged.

### Example 4

The organic electrolyte 4 is obtained by mixing 50 vol % of ACE with 50 vol % of EC and adding an amount of LiBF₄ so that its concentration in the liquid components is 1 mol/l.

### Example 5

The organic electrolyte 4 is obtained by performing the mixing as described in Examples 1 to 4, wherein the concentration of LiPF₆ or LiBF₄ is changed to 0.5 mol/l, 1.5 mol/l, 2 mol/l, and 3 mol/l.

### Example 6

The organic electrolyte 4 is obtained by performing the mixing as described in Examples 1 to 5, wherein LiPF₆ or LiBF₄ is replaced by one of the following conductive salts: lithium perchlorate (LiClO₄), lithium tetrafluoroborate (LiBF₄), lithium hexafluorophosphate (LiPF₆), lithium hexafluoroarsenate (LiAsF₆), lithium trifluoromethanesulfonate (LiSOsCFs), lithium bis(trifluoromethylsulfonyl)imide (LiN(SO₂CF₃)₂), lithium bis(pentafluoroethanesulfonyl)imide (LiN(SO₂C₂F₅)₂).

### Electrolyte Compositions - Example 1

| | | **Mixture 1:** | | | **Mixture 2:** | | |
|---|---|---|---|---|---|---|---|
| | | **Acetonitrile: Ethylene Carbonate (90:10), 1M LiPF₆** | | | **Acetonitrile: Ethylene Carbonate (90:10) + 5 mM LiBOB, 1M LiPF₆** | | |
| **CRate** | **Current (A)** | **Capacity (Ah)** | **Cell Energy (Wh/Kg)** | **Cell Power (W/Kg)** | **Capacity (Ah)** | **Cell Energy (Wh/Kg)** | **Cell Power (W/Kg)** |
| **1** | 3 | 3.6 | 41.0 | 35.0 | 3.6 | 40.96 | 33.37 |
| **5** | 15 | 3.3 | 37.0 | 170.0 | 3.2 | 36.78 | 170.49 |
| **10** | 30 | 3.0 | 34.0 | 337.0 | 3.1 | 34.93 | 341.59 |
| **20** | 60 | 2.9 | 33.0 | 661.0 | 2.9 | 33.73 | 679.27 |
| **50** | 150 | 2.5 | 27.0 | 1519.0 | 2.8 | 27.71 | 1578.15 |
| **65** | 200 | 2.2 | 24.0 | 1929.0 | 2.8 | 26.53 | 2178.77 |

Compositions where tested employing industrial cell with a cylindrical geometry of a diameter of 40 mm and a length of 85 mm. The operational voltage window was 1-3 V.

### Example 2

| | | **Mixture 1:** | | | **Mixture 3:** | | |
|---|---|---|---|---|---|---|---|
| | | **Acetonitrile: Ethylene Carbonate (90:10), 1M LiPF₆** | | | **Acetonitrile: Ethylene Carbonate (90:10) + 10 mM LiBOB, 1M LiPF₆** | | |
| **CRate** | **Current (A)** | **Capacity (Ah)** | **Cell Energy (Wh/Kg)** | **Cell Power (W/Kg)** | **Capacity (Ah)** | **Cell Energy (Wh/Kg)** | **Cell Power (W/Kg)** |
| **1** | 3 | 3.6 | 41.0 | 35.0 | 3.50 | 41.50 | 34.00 |
| **5** | 15 | 3.3 | 37.0 | 170.0 | 3.20 | 37.00 | 173.00 |
| **10** | 30 | 3.0 | 34.0 | 337.0 | 3.00 | 35.00 | 347.00 |
| **20** | 60 | 2.9 | 33.0 | 661.0 | 3.00 | 34.00 | 689.00 |
| **50** | 150 | 2.5 | 27.0 | 1519.0 | 2.40 | 27.50 | 1643.00 |
| **65** | 200 | 2.2 | 24.0 | 1929.0 | 2.30 | 26.00 | 2235.00 |

Compositions where tested employing industrial cell with a cylindrical geometry of a diameter of 40 mm and a length of 85 mm. The operational voltage window was 1-3 V. Energy retention was 65% for Mixture 1 and 71.65 % for Mixture 3 after 5000 charge-discharge cycles compared to the initial value prior to electrochemical testing.

Overall it is found that the previously described measures allow a significant increase in the charge rate compared to conventional cells with the same nominal capacity. Together with the lower ESR and increased cell energy and cell power, the invention allows for a significant improvement of energy storage cells, such as hybrid ultracapacitors.

### List of reference signs:

- 1: energy storage cell
- 2: first electrode arrangement
- 3: second electrode arrangement
- 4: electrolyte
- 5: separator

- 21: anode terminal
- 22: negative electrode
- 23: current collector
- 24: negative electrode material

- 31: cathode terminal
- 32: positive electrode
- 33: current collector
- 34: positive electrode material

## Claims

1. An organic electrolyte (4) composition for an energy storage cell (1), the composition consisting of
- 50 vol% to 95 vol% acetonitrile;
- 5 vol% to 50 vol% ethylenecarbonate; and added to that
- 2.5 to 15 mM Lithiumbis(oxalato)borate (LiBOB), and - optionally, a lithium conductive salt.

2. The electrolyte composition according to claim 1, wherein the proportion of acetonitrile is 85 vol% to 93 vol% and the proportion of ethylenecarbonate is 7 vol% to 15 vol%.

3. The electrolyte composition according to claim 2, wherein the proportion of acetonitrile is 88 vol% to 93 vol% and the proportion of ethylenecarbonate is 7 vol% to 12 vol%.

4. The electrolyte composition according to claim 3, wherein the proportion of acetonitrile is 89 vol% to 91 vol% and the proportion of ethylenecarbonate is 9 vol% to 11 vol%.

5. The electrolyte (4) composition according to claim 4, wherein the proportion of acetonitrile is 90 vol% and the proportion of ethylenecarbonate is 10 vol%.

6. The electrolyte (4) composition according to claim 1, wherein the proportion of acetonitrile is 65 vol% to 75 vol% and the proportion of ethylenecarbonate is 25 vol% and 35 vol%.

7. The electrolyte (4) composition according to claim 6, wherein the proportion of acetonitrile is 68 vol% to 73 vol% and the proportion of ethylenecarbonate is 27 vol% and 32 vol%.

8. The electrolyte (4) composition according to claim 7, wherein the proportion of acetonitrile is 69 vol% to 71 vol% and the proportion of ethylenecarbonate is 29 vol% and 31 vol%.

9. The electrolyte (4) composition according to claim 8, wherein the proportion of acetonitrile is 70 vol% and the proportion of ethylenecarbonate is 30 vol%.

10. The electrolyte (4) composition according to claim 1, wherein the proportion of acetonitrile is 50 vol% and the proportion of ethylenecarbonate is 50 vol%.

11. The electrolyte composition according to any of the preceding claims, wherein the conductive lithium salt has a concentration of 0.1 mol/l to 3 mol/l.

12. The electrolyte composition according to any of the preceding claims, wherein the lithium conductive salt is selected from a group consisting of lithium perchlorate (LiClO₄), lithium tetrafluoroborate (LiBF₄), lithium hexafluorophosphate (LiPF₆), lithium hexafluoroarsenate (LiAsF₆), lithium trifluoromethanesulfonate (LiSOsCFs), lithium bis(trifluoromethylsulfonyl)imide (LiN(SO₂CF₃)₂), lithium bis(pentafluoroethanesulfonyl)imide (LiN(SO₂C₂F₅)₂), and mixtures thereof.

13. The electrolyte composition according to claim 12, wherein the lithium conductive salt is LiPF₆ or LiBF₄.

14. An energy storage cell (1) for storing electrical energy, the cell (1) comprising a plurality of electrodes (22, 32) that are immersed in an organic electrolyte (4) according to any of the preceding claims, wherein at least one electrode is configured as a negative electrode (22) and at least one electrode is configured as a positive electrode (32).

15. Use of an electrolyte according to any of the claims 1 to 13 in an energy storage cell (1), e.g. an ultracapacitor, that comprises a plurality of electrodes (22, 32) to be immersed in the electrolyte (4), wherein at least one electrode is configured as a negative electrode (22) and at least one electrode is configured as a positive electrode (32), wherein the negative electrode (22) includes a negative active material that comprises or consists of Nb₂O₅ particles, microporous carbon (MC) particles and unavoidable impurities, and/or wherein the positive electrode (32) includes positive active material that for the most part includes or for the most part consists of LiMn₂O₄ (LMO) or Nb-LiMn₂O₄ (Nb-LMO) particles and unavoidable impurities, wherein optionally the amount of niobium in the positive active material Nb-LiMn₂O₄ (Nb-LMO) ranges between 0.001% to 5.0% based on mass of the lithium manganese oxide.
